# EUROPÄISCHE PATENTSCHRIFT

(11) **EP 2 189 288 B1**
(45) Veröffentlichungstag und Bekanntmachung des Hinweises auf die Patenterteilung: **27.02.2019**
(21) Anmeldenummer: 09014563.2
(22) Anmeldetag: 23.11.2009
(51) Int. Cl.: B65H 23/188, B41F 33/16, G05B 13/02

(54) **Verfahren zur Regelung einer Bearbeitungsmaschine mit wenigstens einer Regeleinrichtung**
Method for regulating a processing machine with at least one regulating device
Procédé de réglage d'une machine de traitement dotée d'au moins un dispositif de réglage

(30) Priorität: 25.11.2008 DE 102008058964
(43) Veröffentlichungstag der Anmeldung: 26.05.2010
(73) Patentinhaber: Robert Bosch GmbH, 70469 Stuttgart (DE)
(72) Erfinder: Schnabel, Holger, 97228 Rottendorf (DE); Schultze, Stephan, Dr., 97816 Lohr-Wombach (DE)
(74) Vertreter: Thürer, Andreas

(56) Entgegenhaltungen:
- EP-A2- 0 360 206
- EP-A2- 1 745 925
- DE-A1- 3 143 545
- DE-A1- 4 120 726
- DE-A1- 10 031 529
- US-B1- 6 647 874

## Beschreibung

Die vorliegende Erfindung betrifft ein Verfahren zur Regelung einer Bearbeitungsmaschine, insbesondere einer wellenlosen Druckmaschine, eine entsprechende Bearbeitungsmaschine, ein entsprechendes Computerprogramm sowie ein entsprechendes Computerprogrammprodukt.

Obwohl nachfolgend hauptsächlich auf Druckmaschinen Bezug genommen wird, ist die Erfindung nicht darauf beschränkt, sondern vielmehr auf alle Arten von Bearbeitungsmaschinen gerichtet, bei denen eine Warenbahn bzw. Materialbahn bearbeitet wird. Die Erfindung ist aber insbesondere bei Druckmaschinen, wie z.B. Zeitungsdruckmaschinen, Akzidenzdruckmaschinen, Tiefdruckmaschinen, Verpackungsdruckmaschinen oder Wertpapierdruckmaschinen sowie bei Verarbeitungsmaschinen wie z.B. Beutelmaschinen, Briefumschlagsmaschinen oder Verpackungsmaschinen einsetzbar. Die Warenbahn kann aus Papier, Stoff, Pappe, Kunststoff, Metall, Gummi, in Folienform usw. ausgebildet sein.

### Stand der Technik

Beim Mehrfarbendruck in Rotationsdruckmaschinen erfolgt der Auftrag der einzelnen Farbauszüge, insbesondere für Cyan, Magenta, Gelb und Schwarz, in aufeinander folgenden Druckwerken. Der Bedruckstoff wird dabei als Rollenmaterial bereitgestellt und endlos durch die Druckeinheit geführt. Maßgeblich für die erreichte Druckqualität ist, dass die Druckbilder der einzelnen Farben übereinander liegen. Das Übereinanderliegen der Druckbilder wird dabei als Register bezeichnet. Zur gegenseitigen Ausrichtung der einzelnen Druckwerke werden zusätzlich zu dem eigentlichen Druckbild von jedem Druckwerk Registermessmarken, zum Beispiel in Form von Passerkreuzen, aufgedruckt. Anhand dieser Marken kann ein Versatz zwischen den einzelnen Druckbildern durch ein optisches Messsystem online erfasst werden. Bei Rotationsdrucksystemen ist dieses Messsystem im Allgemeinen Bestandteil eines Regelsystems, der so genannten Registerregelung. Die Registerregelung greift dabei über geeignete Stellglieder in den Druckprozess ein und gleicht erkannte Registerabweichungen aus.

Die Ursache für Abweichungen zwischen den einzelnen Drucken sind neben der relativen Position der Druckwerke zueinander Änderungen in der Geometrie des Bedruckstoffes. Diese Geometrieänderungen werden zum Beispiel durch den Einfluss von Feuchtigkeit und durch zwischen den Druckwerken angeordnete Trocknungsschritte hervorgerufen.

Entsprechende Abweichungen können von dem Regelsystem nicht sofort bzw. nicht ausreichend schnell ausgeglichen werden, was zu entsprechendem Ausschuss führt. Auch nach Beschleunigungsphasen benötigt das Regelsystem eine gewisse Laufzeit, um wieder zu den geeigneten Stellgrößen zu gelangen. Auch hierdurch kann Ausschuss entstehen.

Übliche Regler, wie z.B. P-Regler, D-Regler, I-Regler usw. sowie beliebige Kombinationen davon beinhalten Reglerparameter, die eingestellt werden müssen. Übliche Reglerparameter sind die Proportionalverstärkung K_{P}, die Integralverstärkung K_{I}, die Differentialverstärkung K_{D}, die Nachstellzeit T_{N}, die Vorhaltezeit T_{V}, Verzögerungen T usw. Die Reglerparameter werden im Stand der Technik manuell über eine Auswertung einer Sprungantwort ermittelt bzw. eingestellt. Hierzu wird die Führungsgröße verändert und das Systemverhalten auf diese Sollwertänderung hin untersucht bzw. optimiert. In den meisten Fällen sind daher die Reglerparameter entsprechender Regler auf das Führungsverhalten hin optimiert, jedoch nicht optimal. Insbesondere kann bei einer Optimierung der Reglerparameter auf das Störverhalten hin der Regler bei größeren Änderungen der Führungsgröße in eine Begrenzung laufen.

Aufgrund der Tatsache, dass im Normalbetrieb einer entsprechenden Maschine in der Regel keine Sollwertänderungen mehr erfolgen, kann in der Praxis oft jedoch auch eine Optimierung auf das Störverhalten, d.h. das Verhalten auf Änderungen des Istwerts bzw. bei an der Regelstrecke angreifenden Störgrößen vorteilhaft sein. Im Falle einer Optimierung von Reglerparametern in Bezug auf das Störverhalten ist das Verhalten der Regelung in Reaktion auf Änderungen der Führungsgröße (Sollwert) durch die dann gewählte Parametrierung der Regler jedoch nicht optimal. Diesem Problem kann beispielsweise mit einer Vorfilterung der Führungsgröße begegnet werden, um bei Sollwertänderungen das Regelverhalten nicht negativ zu beeinflussen. Dieser Filter dient dazu, bei Sollwertänderungen diese dem Regelkreis mit geringerer Dynamik zuzuführen, um zum Beispiel den Regler nicht in einer Begrenzung zu treiben. Dies würde zu Nichtlinearitäten führen und könnte in der Folge in einer verringerten Dynamik bis hin zur Schwingneigung des Regelkreises resultieren.

Im Ergebnis bedeutet dies, dass bei Optimierung auf das Störverhalten, bei dem Störungen möglichst optimal ausgeregelt werden sollen, ein wesentlich schlechteres Systemverhalten (z.B. eine Schwingneigung des Systems) im Führungsverhalten die Folge sein kann.

Beispielhaft sei hier z.B. der Einrichtvorgang einer Druckmaschine genannt. Während dieses Vorgangs werden typischerweise durch einen Bediener der Maschine Sollwerte verändert und das Ergebnis wird durch Beobachtung bzw. Messung an der Regelstrecke dem Bediener zugänglich gemacht. Während des Einrichtens müssen im Verhältnis zum späteren Maschinenlauf oft relativ große Verstellungen durchgeführt werden. Bei einer Optimierung auf Störverhalten hat dies oft eine große Wartezeit zur Folge, bis die durchgeführte Sollwertänderung nach Beendigung der Einschwingvorgänge am Streckenausgang stabil erscheint, d.h. beobachtbar wird. Im späteren Maschinenverlauf sind die Sollwertänderungen meist eher gering bzw. von geringerer Dynamik, sodass hier die Dauer der Einschwingvorgänge eher von untergeordneter Relevanz ist.

Aus der Antriebsregelung (nicht Bahnspannungs- oder Registerregelung) sind Verfahren bekannt, bei denen unterschiedliche Reglerparameter verwendet werden können.

Die DE 41 20 726 A1 zeigt eine Drehzahlregelung bei Druckmaschinen, bei der unterschiedliche Reglerparameter manuell eingestellt werden können. Die DE 10 031 529 A1 zeigt ein Verfahren für die Antriebsregelung einer Bahnmaschine, bei der unterschiedliche Reglerparameter zeitabhängig vorgegeben werden.
Aus der DE 10 2005 033 585 ist bekannt, eine Registerregeleinrichtung in der Beschleunigungsphase mit mindestens einem festen Satz von den Reglerparametern zu beaufschlagen, der sich von den Reglerparametern bei konstanter Geschwindigkeit unterscheidet. Nachteilig an dieser Lösung ist, dass die Maschinengeschwindigkeit in keinem unmittelbaren Zusammenhang zu einem Führungs- oder Störverhalten steht und daher eine optimale Wahl der Reglerparameter nicht immer gewährleistet ist. Dokument US 6 647 874 offenbart eine Bahnbearbeitungsmaschine, wobei verschiedene Sätze von Regelparametern für verschiedene Produktionsbedingungen, auch für Sollwerte der Bahnregister eingesetzt sind. Es besteht daher ein Bedarf nach Verbesserungen der Regelung der Bahnspannung und/oder des Registers von bahnverarbeitenden Maschinen, insbesondere wellenlosen Druckmaschinen.
Vor diesem Hintergrund werden mit der vorliegenden Erfindung ein Verfahren, eine Vorrichtung, eine Recheneinheit, ein Computerprogramm sowie ein Computerprogrammprodukt mit den Merkmalen der unabhängigen Patentansprüche vorgeschlagen. Vorteilhafte Weiterbildungen sind Gegenstand der Unteransprüche sowie der nachfolgenden Beschreibung.

Bei dem erfindungsgemäßen Verfahren zur Regelung einer Bearbeitungsmaschine mit wenigstens einer Regeleinrichtung mit Reglerparametern, bei der wenigstens zwei Sätze von Reglerparametern vorgesehen sind, wird die Regeleinrichtung in Abhängigkeit von einer Regelabweichung und/oder einer Sollwertänderung mit einem der wenigstens zwei Sätze von Reglerparametern beaufschlagt. Somit kann bewirkt werden, dass das System abhängig von einer Regelabweichung und/oder abhängig von einer Sollwertänderung entsprechend angepasste Reglerparameter bzw. -parametersätze verwendet.

### Vorteile der Erfindung

Durch die erfindungsgemäße Lösung ist es möglich, Reglerparameter in Abhängigkeit von dem aktuellen Betriebszustand auszuwählen. Insbesondere kann bei einem großen Sprung am Reglereingang, d.h. einem großen Sprung der Regelabweichung oder der Führungsgröße, ein auf. Führungsverhalten hin optimierter Satz von Reglerparametern verwendet werden, wohingegen im Normalbetrieb, bei dem üblicherweise die Führungsgröße konstant bleibt, ein auf Störverhalten hin optimierter Satz von Reglerparametern verwendet wird. Durch die erfindungsgemäße Lösung kann somit eine verbesserte Regelung von Verarbeitungsmaschinen bereitgestellt werden.

In einer vorteilhaften Ausgestaltung wird die Regeleinrichtung bei einer Regelabweichung oberhalb eines Schwellwertes mit einem der wenigstens zwei Sätze von Reglerparametern beaufschlagt und/oder bei einer Regelabweichung unterhalb eines Schwellwertes mit einem anderen der wenigstens zwei Sätze von Reglerparametern beaufschlagt. Es kann beispielsweise vorgesehen sein, dass nur ab einer bestimmten Größe einer Störung eine Änderung der Parametersätze vorgenommen wird, wohingegen bei kleineren Störungen das Reglerverhalten unbeeinflusst bleibt, da gegebenenfalls diesen kleineren Störungen durch üblicherweise verwendete Standard-Parametersätze noch hinreichend gut begegnet werden kann.

In einer anderen vorteilhaften Ausgestaltung wird die Regeleinrichtung bei einer Sollwertänderung oberhalb eines Schwellwertes mit einem der wenigstens zwei Sätze von Reglerparametern beaufschlagt und/oder bei einer Sollwertänderung unterhalb eines Schwellwertes mit einem anderen der wenigstens zwei Sätze von Reglerparametern beaufschlagt. In der zuvor diskutierten Weise kann somit auch zwischen kleineren und größeren Sollwertänderungen unterschieden werden, wobei eine Ausgestaltung dahingehend vorgenommen werden kann, dass geringe Sollwertänderungen keine Änderung entsprechender Reglerparameter nach sich ziehen müssen.

Vorteilhafterweise wird die Regeleinrichtung abhängig von einem Maschinenzustand (z.B. in einer Einrichtphase, im Produktionslauf und dergleichen) mit einem der wenigstens zwei Sätze von Reglerparametern beaufschlagt. In der Einrichtphase einer entsprechenden Maschine werden hierbei üblicherweise größere Anpassungen (Sollwertänderungen) vorgenommen, wohingegen während des Laufs der Maschine zwar Störungen (Istwertänderungen) auftreten können, die Sollwerte aber üblicherweise nicht mehr verändert werden. Diesen charakteristischen Umständen kann dann erfindungsgemäß durch eine jeweilige, angepasste Reglerparameterbeaufschlagung entsprochen werden.

Es kann vorteilhafterweise vorgesehen sein, dass bei einem entsprechenden Verfahren wenigstens einer der wenigstens zwei Sätze von Reglerparametern ein optimiertes Führungsverhalten der Regeleinrichtung bewirkt und/oder ein weiterer der wenigstens zwei Sätze von Reglerparametern ein optimiertes Störungsverhalten der Regeleinrichtung bewirkt. Somit kann, wenn beispielsweise eine Veränderung von Sollwerten vorgenommen wird, eine Reglerparameterbeaufschlagung im Sinne eines guten Führungsverhaltens erfolgen, wohingegen bei Störungen diese durch geeignete Parameter möglichst schnell ausgeregelt werden (Störungsverhalten).

Je nach den zu erfüllenden Anforderungen kann sich eine automatische, eine extern gesteuerte oder eine manuelle Umschaltung der Reglerparameter als vorteilhaft erweisen. Beispielsweise kann der Benutzer vor dem Einstellen von Sollwerten, d.h. ehe er Änderungen vornimmt, eine Reglerparameterbeaufschlagung initiieren, die ein verbessertes Führungsverhalten bewirkt. Umgekehrt kann eine entsprechende Einstellung auch bei einer durch einen Benutzer erkannten Störung erfolgen. Die Benutzereingabe kann durch eine externe Steuerung oder eine automatische Umschaltung ersetzt oder unterstützt werden und kann auch unabhängig von einer Benutzereingabe, beispielsweise durch Verwendung eines Sensorsystems, vollautomatisch vorgenommen werden.

Es kann sich als vorteilhaft erweisen, eine kurzzeitige Beaufschlagung der Regeleinrichtung mit einem der wenigstens zwei Sätze von Reglerparametern gegenüber einer längeren Beaufschlagung der Regeleinrichtung mit einem anderen der wenigstens zwei Sätze von Reglerparametern vorzunehmen. Somit kann die Maschine mit einem ersten Parametersatz im Grundzustand laufen, und ein weiterer Parametersatz kann, eventuell zeitgesteuert, nur über einen vergleichsweise kurzen Zeitabschnitt ausgewählt werden. Vorzugsweise kann die Regeleinrichtung im Grundzustand mit einem auf Störverhalten optimierten Parametersatz ausgestattet sein, wobei kurzfristig bei einem Auftreten von übermäßigen Sollwert- bzw. Regelabweichungsänderungen ein auf Führungsverhalten hin optimierter Parametersatz der Regeleinrichtung zugeführt wird.

Vorteilhafterweise kann eine dynamische Veränderung zwischen wenigstens zwei Sätzen von Reglerparametern vorgesehen sein. Dies kann neben dem diskreten Bereitstellen von Parametersätzen erfolgen. Beispielsweise können zwei Parametersätze, zwischen denen umzuschalten ist, als Endpunkte eines dynamischen Verstellbereichs, der beim Umschalten abgefahren wird, verwendet werden. Hierdurch können gegebenenfalls zu drastische Systemsprünge vermieden werden.

Ein erfindungsgemäßes Verfahren kann vorteilhafterweise beinhalten, dass die Sätze von Reglerparametern Reglerparameter für Bahnspannungsregelungen einer bahnverarbeitenden Bearbeitungsmaschine, insbesondere einer wellenlosen Druckmaschine, umfassen. Durch das verbesserte Verfahren können dabei Änderungen in der Bahnspannung in günstiger Weise beeinflusst werden.

Ein erfindungsgemäßes Verfahren kann vorteilhafterweise ferner auch beinhalten, dass die Sätze von Reglerparametern Reglerparameter zur Registerregelung einer Verarbeitungsmaschine, insbesondere einer wellenlosen Druckmaschine, umfassen. Hierdurch kann die gängige Regelung der Bahnbearbeitungsachsen verbessert und effizienter gestaltet werden.

Eine Bearbeitungsmaschine mit wenigstens einer Regeleinrichtung mit Reglerparametern, bei der wenigstens zwei Sätze von Reglerparametern vorgesehen sind, wobei Mittel vorgesehen sind, um die Regeleinrichtung in Abhängigkeit von einer Regelabweichung und/oder einer Sollwertänderung mit einem der wenigstens zwei Sätze von Reglerparametern zu beaufschlagen, ist ebenfalls Gegenstand der Erfindung.

Die Erfindung betrifft zudem ein Computerprogramm mit Programmcodemitteln, um alle Schritte des erfindungsgemäßen Verfahrens durchzuführen, wenn das Computerprogramm auf einem Computer oder einer entsprechenden Recheneinheit, insbesondere in einer Bearbeitungsmaschine, ausgeführt wird.

Das erfindungsgemäß ebenso vorgesehene Computerprogrammprodukt mit Programmcodemitteln, die auf einem computerlesbaren Datenträger gespeichert sind, ist zum Durchführen aller Schritte des erfindungsgemäßen Verfahrens ausgebildet, wenn das Computerprogramm auf einem Computer oder einer entsprechenden Recheneinheit, insbesondere in einer Bearbeitungsmaschine ausgeführt wird. Geeignete Datenträger sind insbesondere Disketten, Festplatten, Flashspeicher, EEPROMs, CD-ROMs, DVDs und dergleichen. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung. Es versteht sich, dass die vorstehend genannten und die nachfolgenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

### Figurenbeschreibung

- Figur 1,: zeigt eine schematische Darstellung einer als Druckmaschine ausgebildeten erfindungsgemäßen Bearbeitungsmaschine,
- Figur 2: zeigt eine schematische Darstellung eines erfindungsgemäß ausgeführten Regelkreises zur Regelung einer bahnverarbeitenden Maschine und
- Figur 3: zeigt ein Flussdiagramm einer besonders bevorzugten Ausführungsform des erfindungsgemäßen Verfahrens.

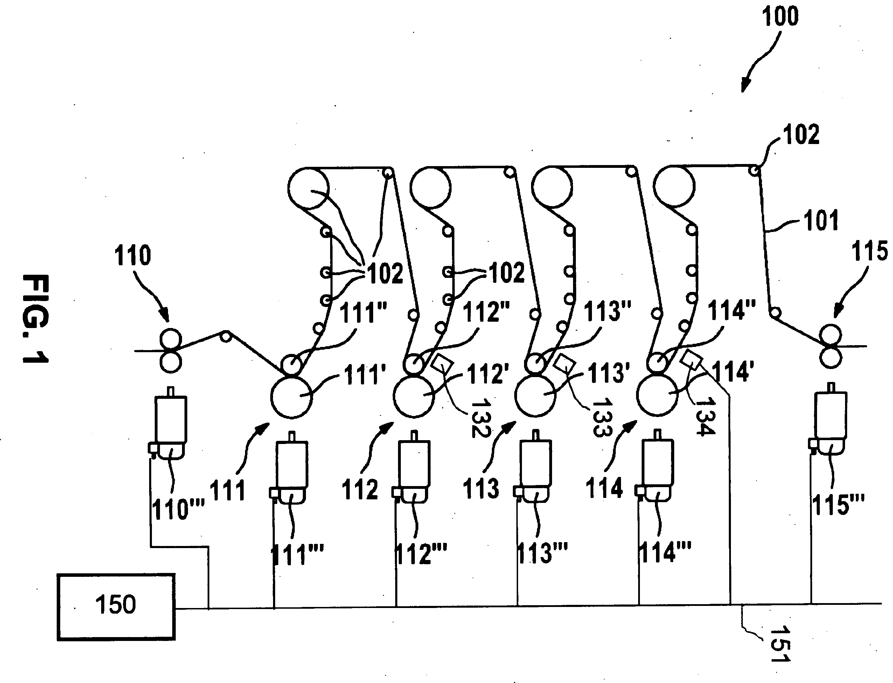

In Figur 1 ist eine als Druckmaschine ausgestaltete Bearbeitungsmaschine insgesamt mit 100 bezeichnet. Ein Bedruckmaterial, beispielsweise Papier 101, wird der Maschine über ein Einzugswerk (Infeed) 110 zugeführt. Das Papier 101 wird durch als Druckwerke 111, 112, 113, 114 ausgebildete Bearbeitungseinrichtungen geführt und bedruckt und durch ein Auszugswerk (Outfeed) 115 wieder ausgegeben. Die Ein-, Auszugs- und Druckwerke sind positionierbar, insbesondere zylinder- bzw. winkelkorrigierbar, angeordnet. Die Druckwerke 111 bis 114 liegen in einem bahnspannungsgeregelten Bereich zwischen dem Einzugswerk 110 und dem Auszugswerk 115.

Die Druckwerke 111 bis 114 weisen jeweils einen Druckzylinder 111' bis 114' auf, gegen den jeweils ein Presseur 111" bis 114" mit starkem Druck angestellt ist. Die Druckzylinder sind einzeln und unabhängig antreibbar. Die zugehörigen Antriebe 111'" bis 114'" sind schematisch dargestellt. Die Presseure sind frei drehbar ausgebildet. Die Druckwerke 111 bis 114 bilden jeweils zusammen mit dem durchlaufenden Papier 101 eine reibschlüssig verbundene Einheit (Klemmstelle). Die Antriebe der einzelnen Werke sind über eine Datenverbindung 151 mit einer Steuerung 150 verbunden.

Weiterhin befinden sich zwischen den Druckwerken mehrere Sensoren 132, 133, 134 zur Erfassung von Registermarken, die ebenfalls mit der Steuerung 150 verbunden sind. Aus Übersichtlichkeitsgründen ist nur ein Sensor 134 mit der Steuerung verbunden gezeigt. Die Steuerung 150 ist für eine automatische Reglerparametrierung eingerichtet.

In den Bahnabschnitten zwischen den einzelnen Druckwerken 111 bis 114 wird das Papier 101 über nicht näher erläuterte Rollen geführt, die teilweise mit 102 bezeichnet sind. Aus Gründen der Übersichtlichkeit sind nicht alle Rollen mit Bezugszeichen 102 versehen. Es kann sich insbesondere um Umlenkrollen, Trocknungs-, Kühlungs-, oder Beschneideeinrichtungen usw. handeln.

Nachfolgend wird beschrieben, wie bei der dargestellten Druckmaschine eine Register- und/oder Bahnspannungsregelung durchgeführt wird. In den einzelnen Bahnabschnitten zwischen den Druckwerken 112 bis 114 sind die Sensoren 132, 133, 134 angeordnet, die die Registerlage der Warenbahn 101 bestimmen und dazu bspw. als Markenleser ausgebildet sind. Beim Durchlauf der Warenbahn 101, z.B. Papier, wird jeweils von einem Markenleser erfasst, wann eine Druckmarke (nicht gezeigt), die vorzugsweise vom ersten Druckwerk 111 aufgebracht wird, den Markenleser erreicht. Der Messwert wird einer Einrichtung zur Registerregelung (Registerregler) zugeführt. Anschließend wird die Position des entsprechenden Druckzylinders 112' bis 114' festgestellt und dieser Messwert ebenfalls dem Registerregler zugeführt. Daraus kann eine jeweilige Registerabweichung berechnet werden (Bahn/Zylinder-Korrektur). Die festgestellten Registerabweichungen werden zur Positionierung der Druckwerke 112 bis 114 und bevorzugterweise auch für die Positionierung des Einzugswerks 110 und des Auszugswerks 115 verwendet.

Alternativ kann der Markenleser Positionen bzw. Markenabstände aller zuvor aufgebrachten Registermarken vermessen und der Einrichtung zur Registerregelung zuführen. Daraus kann eine jeweilige Registerabweichung zwischen aufgebrachten Registermarken berechnet werden (Bahn/Bahn-Korrektur) und zur Positionierung der Druckwerk 111 bis 114 und bevorzugterweise auch für die Positionierung des Einzugswerks 110 und des Auszugswerks 115 verwendet werden.

Alternativ oder zusätzlich ist die Bahn vorzugsweise zwischen dem Einzugswerk 110 und dem ersten Druckwerk 111 mit einem ersten Sensor und zwischen dem letzten Druckwerk 114 und dem Auszugswerk 115 mit einem zweiten Sensor versehen, die als Bahnspannungssensoren ausgeführt sind. Von den Sensoren (nicht gezeigt) erfasste Bahnspannungswerte werden einer Einrichtung zur Bahntransportregelung (Zugregler) zugeführt. Der Zugregler steuert in Abhängigkeit von den Bahnspannungswerten die Antriebe 110'" und 115'" des Einzugswerks 110 und des Auszugswerks 115, sowie vorteilhafterweise die Antriebe 111'" bis 114'" der Druckwerke 111 bis 114.

Gemäß der dargestellten Ausführungsform werden Registerregler und/oder Zugregler unter Verwendung eines erfindungsgemäßen Verfahrens automatisch parametriert. Es versteht sich, dass die bisher genannten Zugregler und Registerregler in einer gemeinsamen Recheneinheit 150, beispielsweise einem Computer, verkörpert sein können.

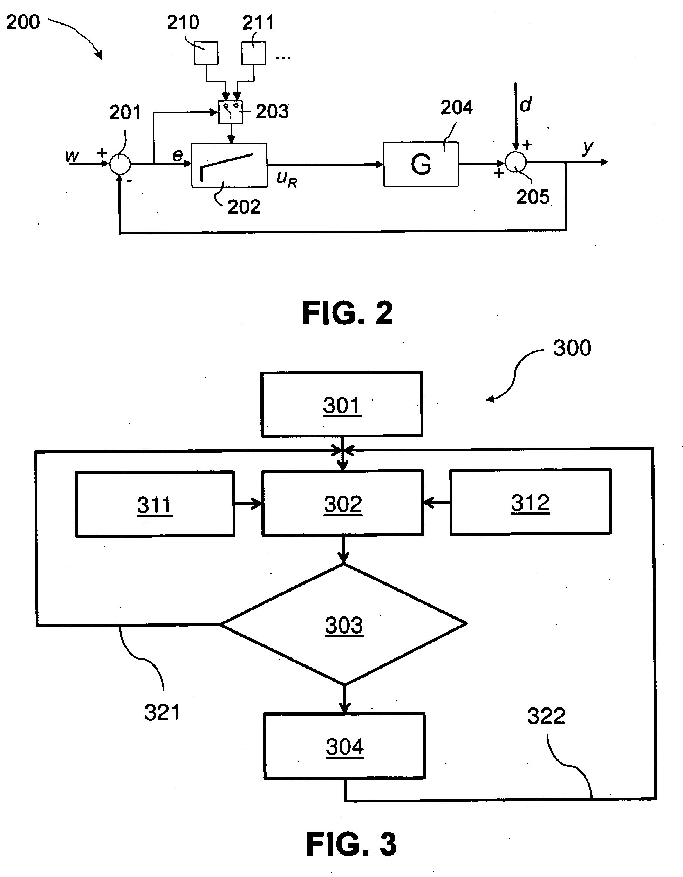

In Figur 2 ist ein Regelkreis schematisch dargestellt und insgesamt mit 200 bezeichnet. Dem Regelkreis kann beispielsweise eine Druckmaschine gemäß Figur 1 zugrunde liegen. Der Regelkreis 200 umfasst ein Vergleichsglied 201, dem eine Führungsgröße bzw. ein Sollwert w zugeführt wird. Das Vergleichsglied 201 berechnet aus der Führungsgröße w und einer rückgeführten Regelgröße y eine Regelabweichung e, die dem eigentlichen Regelglied 202 zugeführt wird. Bei der Führungsgröße w kann es sich am Beispiel einer Registerregelung um den Sollwert einer Registerlage handeln, wobei es sich dann bei der Regelgröße y um den gemessenen Istwert der Registerlage handelt. Das Vergleichsglied berechnet in diesem Fall den Registerfehler bzw. die Registerabweichung e.

Das Regelglied 202 ist im gezeigten Beispiel als PI-Glied ausgebildet und umfasst als Reglerparameter die Proportionalverstärkung K_{R} und eine Nachstellzeit T_{N}.

Gemäß der dargestellten Ausführungsform der Erfindung können dem Regelglied 202 von einem Schaltglied 203 in Abhängigkeit von der Regelabweichung e verschiedene Reglerparameter zugeführt werden. Das Schaltglied 203 kann dazu dem Regelglied 202 einen ausgewählten Satz 210, 211, ... von Reglerparametern zuführen. Die Auswahl des jeweiligen Satzes von Reglerparametern kann beispielsweise über einen Schwellwertvergleich erfolgen.

Das Regelglied 202 berechnet auf Grundlage der ihm zugeführten Reglerparameter eine Reglerausgangsgröße *u_{R}*, die der Regelstrecke (G) 204 zugeführt wird. Nach der Regelstrecke wirkt eine Störgröße d (im gezeigten Beispiel ebenfalls additiv über ein Addierglied 205) ein, die die Regelgröße bzw. den Istwert y verändert. Dieser wird schließlich wieder an das Vergleichsglied 201 rückgeführt.

In Figur 3 ist ein Flussdiagramm eines erfindungsgemäßen Verfahrens dargestellt und insgesamt mit 300 bezeichnet. Bei Schritt 301 befindet sich die Bearbeitungsmaschine in einem definierten Zustand, in dem die Regeleinrichtung mit einem ersten Parametersatz beaufschlagt ist. Beispielsweise ist ein Bahnspannungsregler mit einem ersten Satz von Bahnspannungsreglerparametern und/oder ein Registerregler einem ersten Satz von Registerreglerparametern beaufschlagt. Weitere Parameter oder Parametersätze können ebenfalls vorgesehen sein, welche eine Regelung entsprechender anderer Regelstrecken oder Teil-Regelstrecken beeinflussen.

In Schritt 302 wartet das Verfahren auf eine Eingabe bzw. eine Änderung. Eine entsprechende Änderung kann eine manuelle Verstellung der Maschinencharakteristika umfassen, beispielsweise das Umschalten eines Betriebsmodus "Einrichten" zu einem Betriebsmodus "Produktion", oder das Umschalten eines Betriebsmodus "Langsamdruck" in einen Betriebsmodus "Schnelldruck" und dergleichen. Eine entsprechende Änderung, die manuell durch einen Benutzer oder automatisch durch eine externe Steuereinrichtung erfolgen kann, ist in dem Ablaufplan 300 beispielhaft mit 311 bezeichnet. Es versteht sich, dass das erfindungsgemäße Verfahren auf unterschiedliche Weise von einer entsprechenden Änderung in Kenntnis gesetzt werden kann. Beispielsweise können hierfür separate Datenleitungen verwendet werden oder es kann eine Benutzereingabe, die in einer entsprechenden Einrichtung vorgenommen wird, beinhaltet sein. Ferner kann in Schritt 302 auch eine mit 312 bezeichnete Änderung eines Istwertes, eines Sollwertes und/oder einer Regelabweichung detektiert werden. Auch diese Bestimmung kann auf unterschiedliche Weise erfolgen, beispielsweise kann bei 312 ein gefiltertes oder ungefiltertes Sensorsignal bereitgestellt werden.

Bei Schritt 303 erfolgt eine Entscheidung aufgrund der bei Schritt 302 festgestellten Änderung eines Maschinenzustandes oder einer entsprechenden Ist- und/oder Sollwertänderung. In Schritt 303 kann ein Schwellwertvergleich enthalten sein. Beispielsweise kann bei Schritt 303 erkannt werden, dass eine Maschinenzustandsänderung erfolgt ist, die einem Entscheidungskriterium entspricht. Ferner kann erkannt werden, dass eine Sollwertänderung erfolgt ist, die entweder über oder unter einem entsprechenden Sollwertänderungsschwellwert liegt. Entsprechendes gilt für Istwerte bzw. Störungen. Bei Schritt 303 können vordefinierte oder der jeweiligen Situation angepasste Entscheidungskriterien verwendet werden, aufgrund derer eine Entscheidung erfolgt.

Erkennt das System bei Schritt 303, dass kein Entscheidungskriterium erfüllt ist, stellt das System fest, dass keine Änderung vorzunehmen ist, und es erfolgt entsprechend Pfeil 321 eine Rückkehr des Systems in den Wartezustand des Schritts 302. Das System wartet nun erneut auf eine entsprechende Eingabe oder Änderung.

Erkennt das System bei Schritt 303 hingegen, dass ein Entscheidungskriterium erfüllt ist und dass dementsprechend eine Änderung vorzunehmen ist, nimmt das System diese Änderung bei Schritt 304 vor. Bevorzugterweise wird das System bei 304 eine Auswahl eines (oder mehrerer) Parametersatzes (oder mehrerer Parametersätze) aus einer Anzahl an Reglerparametern treffen und die zugehörigen Regler bzw. Regeleinrichtungen mit den Reglerparametern beaufschlagen. So kann beispielsweise, wenn bei Schritt 302 eine Änderung des Istwerts bzw. eine Störung detektiert wurde und der detektierte Wert bei 303 einem Entscheidungskriterium entspricht, ein Reglerparametersatz ausgewählt werden, der ein gutes Störverhalten des jeweiligen Reglers bzw. der jeweiligen Regler zur Folge hat. Andererseits kann vorgesehen sein, dass, wenn bei Schritt 302 eine Änderung im Sollwert erfasst wurde, entsprechend ein Reglerparametersatz zur Einstellung eines guten Führungsverhaltens bereitgestellt wird. Die Parametersätze können beispielsweise einer Lookup-Tabelle oder Datenbank entnommen werden, wobei dann eine Auswahl aufgrund des bei Schritt 303 bestimmten Entscheidungskriteriums vorgenommen wird. Es kann jedoch auch eine entsprechende Berechnung der Parametersätze erfolgen.

Ist bei Schritt 304 eine entsprechende Beaufschlagung der entsprechenden Regler mit dem jeweiligen Parametersatz erfolgt, kehrt das System in den Wartezustand zurück und wartet auf eine erneute Änderung oder Eingabe.

### Bezugszeichenliste

- 100: Druckmaschine
- 101: Papierbahn
- 110: Einzugswerk
- 111 - 114: Druckwerk
- 111' - 114': Druckzylinder
- 111" - 114": Presseur
- 111'" - 114'": Antrieb
- 115: Auszugswerk
- 132, 133, 134: Registermarkensensor
- 150: Steuerung
- 151: Datenverbindung
- 200: Regelkreis
- 201: Vergleichsglied
- 202: PI-Glied
- 203: Schaltglied
- 204: Regelstrecke
- 205: Addierglied
- 210, 221: Parametersatz
- 300: Flussdiagramm
- 301 - 312: Verfahrensschritte
- 321, 322: Verbindung

## Patentansprüche

1. Verfahren zur Regelung der Bahnspannung bei einer bahnverarbeitenden Bearbeitungsmaschine mit wenigstens einer Regeleinrichtung (150; 200) mit Reglerparametern, wobei wenigstens zwei Sätze (210, 211) von Reglerparametern vorgesehen sind, wobei die Regeleinrichtung (150; 200) in Abhängigkeit von einer Regelabweichung (e) und/oder einer Sollwertänderung (w) mit einem der wenigstens zwei Sätze (210, 211) von Reglerparametern beaufschlagt wird.

2. Verfahren nach Anspruch 1, wobei die Regeleinrichtung (150; 200) bei einer Sollwertänderung (w) oberhalb eines Schwellwertes mit einem der wenigstens zwei Sätze (210, 211) von Reglerparametern beaufschlagt wird und/oder bei einer Sollwertänderung (w) unterhalb eines Schwellwertes mit einem anderen der wenigstens zwei Sätze (210, 211) von Reglerparametern beaufschlagt wird.

3. Verfahren zur Regelung des Registers bei einer bahnverarbeitenden Bearbeitungsmaschine mit wenigstens einer Regeleinrichtung (150; 200) mit Reglerparametern, wobei wenigstens zwei Sätze (210, 211) von Reglerparametern vorgesehen sind, **dadurch gekennzeichnet, dass** die Regeleinrichtung (150; 200) in Abhängigkeit von einer Regelabweichung (e) mit einem der wenigstens zwei Sätze (210, 211) von Reglerparametern beaufschlagt wird.

4. Verfahren nach einem der vorstehenden Ansprüche, wobei die Regeleinrichtung (150; 200) bei einer Regelabweichung (e) oberhalb eines Schwellwertes mit einem der wenigstens zwei Sätze (210, 211) von Reglerparametern beaufschlagt wird und/oder bei einer Regelabweichung (e) unterhalb eines Schwellwertes mit einem anderen der wenigstens zwei Sätze (210, 211) von Reglerparametern beaufschlagt wird.

5. Verfahren nach einem der vorstehenden Ansprüche, wobei die Regeleinrichtung (150; 200) abhängig von einem Maschinenzustand mit einem der wenigstens zwei Sätze (210, 211) von Reglerparametern beaufschlagt wird.

6. Verfahren nach einem der vorstehenden Ansprüche, wobei wenigstens einer der wenigstens zwei Sätze (210, 211) von Reglerparametern ein optimiertes Führungsverhalten der Regeleinrichtung (150; 200) bewirkt und/oder ein weiterer der wenigstens zwei Sätze (210, 211) von Reglerparametern ein optimiertes Störungsverhalten der Regeleinrichtung (150; 200) bewirkt.

7. Verfahren nach einem der vorstehenden Ansprüche, wobei eine automatische, eine extern gesteuerte oder eine manuelle Umschaltung der Reglerparameter durchgeführt wird.

8. Verfahren nach einem der vorstehenden Ansprüche, wobei eine kurzzeitige Beaufschlagung der Regeleinrichtung (150; 200) mit einem der wenigstens zwei Sätze (210, 211) von Reglerparametern gegenüber einer längeren Beaufschlagung der Regeleinrichtung mit einem anderen der wenigstens zwei Sätze (210, 211) von Reglerparametern erfolgt.

9. Verfahren nach einem der vorstehenden Ansprüche, wobei eine dynamische Veränderung zwischen wenigstens zwei Sätzen (210, 211) von Reglerparametern erfolgt.

10. Verfahren nach einem der vorstehenden Ansprüche, wobei die Regeleinrichtung (150; 200) einen P-Regler, einen PI-Regler, einen PID-Regler und/oder einen PD-Regler aufweist.

11. Verfahren nach Anspruch 10, wobei die Reglerparameter eine Proportionalverstärkung, eine Nachstellzeit und/oder eine Vorhaltezeit aufweisen.

12. Bahnverarbeitende Bearbeitungsmaschine (100) mit wenigstens einer Regeleinrichtung (150; 200) zur Bahnspannungsregelung mit Reglerparametern, wobei wenigstens zwei Sätze (210, 211) von Reglerparametern vorgesehen sind, wobei Mittel (203) vorgesehen sind, um die Regeleinrichtung (150; 200) in Abhängigkeit von einer Regelabweichung (e) und/oder einer Sollwertänderung (w) mit einem der wenigstens zwei Sätze (210, 211) von Reglerparametern zu beaufschlagen.

13. Bahnverarbeitende Bearbeitungsmaschine (100) mit wenigstens einer Regeleinrichtung (150; 200) zur Registerregelung mit Reglerparametern, wobei wenigstens zwei Sätze (210, 211) von Reglerparametern vorgesehen sind, wobei Mittel (203) vorgesehen sind, um die Regeleinrichtung (150; 200) in Abhängigkeit von einer Regelabweichung (e) mit einem der wenigstens zwei Sätze (210, 211) von Reglerparametern zu beaufschlagen.

14. Bahnverarbeitende Bearbeitungsmaschine (100) nach Anspruch 12 oder 13, die als wellenlose Druckmaschine ausgebildet ist.

15. Computerprogramm mit Programmcodemitteln, um alle Schritte eines Verfahrens nach einem der Ansprüche 1 bis 11 durchzuführen, wenn das Computerprogramm auf einem Computer oder einer entsprechenden Recheneinheit ausgeführt wird.

16. Computerprogrammprodukt mit Programmcodemitteln, die auf einem computerlesbaren Datenträger gespeichert sind, um alle Schritte zur Regelung entsprechend einem Verfahren nach einem Ansprüche 1 bis 11 durchzuführen, wenn das Computerprogramm auf einem Computer oder einer entsprechenden Recheneinheit ausgeführt wird.

## Claims

1. Method for controlling the web tension in a web-processing machine having at least one control device (150; 200) with controller parameters, wherein at least two sets (210, 211) of controller parameters are provided, wherein one of the at least two sets (210, 211) of controller parameters is applied to the control device (150; 200) on the basis of a system deviation (e) and/or a desired value change (w).

2. Method according to Claim 1, wherein one of the at least two sets (210, 211) of controller parameters is applied to the control device (150; 200) in the case of a desired value change (w) above a threshold value and/or another of the at least two sets (210, 211) of controller parameters is applied in the case of a desired value change (w) below a threshold value.

3. Method for controlling the register in a web-processing machine having at least one control device (150; 200) with controller parameters, wherein at least two sets (210, 211) of controller parameters are provided, **characterized in that** one of the at least two sets (210, 211) of controller parameters is applied to the control device (150; 200) on the basis of a system deviation (e).

4. Method according to one of the preceding claims, wherein one of the at least two sets (210, 211) of controller parameters is applied to the control device (150; 200) in the case of a system deviation (e) above a threshold value and/or another of the at least two sets (210, 211) of controller parameters is applied in the case of a system deviation (e) below a threshold value.

5. Method according to one of the preceding claims, wherein one of the at least two sets (210, 211) of controller parameters is applied to the control device (150; 200) on the basis of a machine state.

6. Method according to one of the preceding claims, wherein at least one of the at least two sets (210, 211) of controller parameters causes an optimized behaviour of the control device (150; 200) in response to setpoint changes and/or a further one of the at least two sets (210, 211) of controller parameters causes an optimized behaviour of the control device (150; 200) in response to disturbances.

7. Method according to one of the preceding claims, wherein an automatic, an externally controlled or a manual changeover of the controller parameters is carried out.

8. Method according to one of the preceding claims, wherein one of the at least two sets (210, 211) of controller parameters is briefly applied to the control device (150; 200) in comparison with another of the at least two sets (210, 211) of controller parameters being applied to the control device for a longer time.

9. Method according to one of the preceding claims, wherein a dynamic change between at least two sets (210, 211) of controller parameters is carried out.

10. Method according to one of the preceding claims, wherein the control device (150; 200) has a P controller, a PI controller, a PID controller and/or a PD controller.

11. Method according to Claim 10, wherein the controller parameters have a proportional gain, a reset time and/or a rate time.

12. Web-processing machine (100) having at least one control device (150; 200) for controlling the web tension with controller parameters, wherein at least two sets (210, 211) of controller parameters are provided, wherein means (203) are provided in order to apply one of the at least two sets (210, 211) of controller parameters to the control device (150; 200) on the basis of a system deviation (e) and/or a desired value change (w).

13. Web-processing machine (100) having at least one control device (150; 200) for controlling register with controller parameters, wherein at least two sets (210, 211) of controller parameters are provided, wherein means (203) are provided in order to apply one of the at least two sets (210, 211) of controller parameters to the control device (150; 200) on the basis of a system deviation (e).

14. Web-processing machine (100) according to Claim 12 or 13, which is in the form of a shaftless printing machine.

15. Computer program having program code means for carrying out all steps of a method according to one of Claims 1 to 11 when the computer program is executed on a computer or a corresponding computing unit.

16. Computer program product having program code means which are stored on a computer-readable data storage medium in order to carry out all steps for control in accordance with a method according to one of Claims 1 to 11 when the computer program is executed on a computer or a corresponding computing unit.

## Revendications

1. Procédé de régulation de la tension de bande sur une machine d'usinage qui transforme une bande, comprenant au moins un dispositif de régulation (150 ; 200) ayant des paramètres de régulateur, au moins deux jeux (210, 211) de paramètres de régulateur étant prévus, le dispositif de régulation (150 ; 200) étant alimenté avec l'un des au moins deux jeux (210, 211) de paramètres de régulateur en fonction d'un écart de régulation (e) et/ou d'une variation de valeur de consigne (w).

2. Procédé selon la revendication 1, le dispositif de régulation (150 ; 200), en présence d'une variation de valeur de consigne (w) au-dessus d'une valeur de seuil, étant alimenté avec l'un des au moins jeux (210, 211) de paramètres de régulateur et/ou, en présence d'une variation de valeur de consigne (w) au-dessous d'une valeur de seuil, étant alimenté avec un autre des au moins deux jeux (210, 211) de paramètres de régulateur.

3. Procédé de régulation du repérage sur une machine d'usinage qui transforme une bande, comprenant au moins un dispositif de régulation (150 ; 200) ayant des paramètres de régulateur, au moins deux jeux (210, 211) de paramètres de régulateur étant prévus, **caractérisé en ce que** le dispositif de régulation (150 ; 200) est alimenté avec l'un des au moins deux jeux (210, 211) de paramètres de régulateur en fonction d'un écart de régulation (e).

4. Procédé selon l'une des revendications précédentes, le dispositif de régulation (150 ; 200), en présence d'un écart de régulation (e) au-dessus d'une valeur de seuil, étant alimenté avec l'un des au moins jeux (210, 211) de paramètres de régulateur et/ou, en présence d'un écart de régulation (e) au-dessous d'une valeur de seuil, étant alimenté avec un autre des au moins jeux (210, 211) de paramètres de régulateur.

5. Procédé selon l'une des revendications précédentes, le dispositif de régulation (150 ; 200) étant alimenté avec l'un des au moins deux jeux (210, 211) de paramètres de régulateur en fonction d'un état de machine.

6. Procédé selon l'une des revendications précédentes, au moins l'un des au moins deux jeux (210, 211) de paramètres de régulateur produisant un comportement de conduite optimisé du dispositif de régulation (150 ; 200) et/ou un autre des au moins deux jeux (210, 211) de paramètres de régulateur produisant un comportement sur défaut optimisé du dispositif de régulation (150 ; 200).

7. Procédé selon l'une des revendications précédentes, une permutation automatique commandée depuis l'extérieur ou manuelle des paramètres de régulateur étant effectuée.

8. Procédé selon l'une des revendications précédentes, une alimentation de courte durée du dispositif de régulation (150 ; 200) avec l'un des au moins deux jeux (210, 211) de paramètres de régulateur s'effectuant par opposition à une alimentation plus longue du dispositif de régulation avec autre des au moins deux jeux (210, 211) de paramètres de régulateur.

9. Procédé selon l'une des revendications précédentes, une modification dynamique entre au moins deux jeux (210, 211) de paramètres de régulateur ayant lieu.

10. Procédé selon l'une des revendications précédentes, le dispositif de régulation (150 ; 200) possédant un régulateur P, un régulateur PI, un régulateur PID et/ou un régulateur PD.

11. Procédé selon la revendication 10, les paramètres de régulateur comprenant une amplification proportionnelle, un temps d'intégration et/ou une constante de temps.

12. Machine d'usinage (100) qui transforme une bande, comprenant au moins un dispositif de régulation (150 ; 200) destiné à réguler la tension de bande avec des paramètres de régulateur, au moins deux jeux (210, 211) de paramètres de régulateur étant prévus, des moyens (203) étant présents pour alimenter le dispositif de régulation (150 ; 200) avec l'un des au moins deux jeux (210, 211) de paramètres de régulateur en fonction d'un écart de régulation (e) et/ou d'une variation de valeur de consigne (w).

13. Machine d'usinage (100) qui transforme une bande, comprenant au moins un dispositif de régulation (150 ; 200) destiné à réguler le repérage avec des paramètres de régulateur, au moins deux jeux (210, 211) de paramètres de régulateur étant prévus, des moyens (203) étant présents pour alimenter le dispositif de régulation (150 ; 200) avec l'un des au moins deux jeux (210, 211) de paramètres de régulateur en fonction d'un écart de régulation (e).

14. Machine d'usinage (100) qui transforme une bande selon la revendication 12 ou 13, laquelle est réalisée sous la forme d'une presse d'impression sans arbres.

15. Produit de programme informatique comprenant des moyens de code de programme pour exécuter toutes les étapes d'un procédé selon l'une des revendications 1 à 11 lorsque le programme informatique est exécuté sur un ordinateur ou sur une unité de calcul correspondante.

16. Programme informatique comprenant des moyens de code de programme qui sont enregistrés sur un support de données lisible par ordinateur, pour exécuter toutes les étapes de régulation conformément à un procédé selon l'une des revendications 1 à 11 lorsque le programme informatique est exécuté sur un ordinateur ou sur une unité de calcul correspondante.
